# EUROPEAN PATENT APPLICATION

(11) **EP 2 902 923 A1**
(43) Date of publication of application: **05.08.2015**
(21) Application number: 13890864.5
(22) Date of filing: 24.12.2013
(51) Int. Cl.: G06F 17/30

(54) **SEARCH ENGINE RANKING METHOD BASED ON USER PARTICIPATION**

(30) Priority: 18.12.2013 CN 201310693680
(71) Applicant: Sun, Yanqun, Dongying, Shandong 257100 (CN)
(72) Inventor: Sun, Yanqun, Dongying, Shandong 257100 (CN)
(74) Representative: Cabinet Chaillot
(86) International application number: PCT/CN2013/090350
(87) International publication number: WO 2015/089860

(57) **Abstract**

The invention relates to a search engine ranking method based on user participation and belongs to the technical field of software. The method is based on a search engine ranking system and a user can express approval, like, disapproval, opposition and other opinions on a display list of search results and perform scoring on all of information and search results; and according to score values of the search results, in next search of the results, the results will be automatically ranked according to the score values, the results with high scores will be ranked ahead and a program for preventing malicious scoring is set. A system established for implementing the method comprises users, the search engine ranking system, a model processing system and an output system. By adopting the method of the invention, the user participation can be strengthened, the expression of the opinions can be performed on the search information and other users can take the opinions as references, thereby effectively improving search quality, facilitating the selection of the users by referring to the opinions, further effectively reducing search time of the users and improving handling efficiency and capability of learning information.

## Description

### Field of the Invention

The invention relates to a search engine ranking method based on user participation and belongs to the technical field of software.

### Background of the Invention

A survey report of China Internet Network Information Center points out that 82.5% of netizens often use search engines and 83.4% of users learn new websites through the search engines. It is thus clear that the search engines play an important role in daily network life of people. An excellent search engine can find real knowledge from a huge amount of trash-like information and upgrade information value by discrimination, processing and purification of the information. However, because relevance ranking algorithms of the current search engines are imperfect, the users generally need to manually choose relevant web pages from a large number of returned results, and the navigation functions of the search engines do not realize obvious advantages.

In the early development of the search engines, ranking of the search results is just according to the sequential order of matching web pages found in a database by a search engine and this can not ensure that the web pages ranked ahead have greater relevance to a user inquiry, so that this can not help the user fast select information with real relevance from overloaded massive information. At present, the number of the web pages accessed by the search engine has achieved the scale of up to billions. Generally, the search results comprise thousands of web pages. Even if these web pages are needed by the user, the user can not browse all of the web pages. How to rank the web pages with the greater relevance ahead, reduce the number of the web pages browsed by the user and help the user fast find the needed information is a work with great significance and rich challenge. Generally, the user is only concerned with documents which are returned by the search engine and ranked ahead. Thus, researching the relevance ranking algorithms of the search engine and ranking the results expected by the users ahead become more and more important.

The search engine not only needs to return the search results, but also should re-process the results, judge which results are more in line with the search intent of the user and rank the documents of the most interest ahead, thereby facilitating the finding of the needed information by the user within a shortest time and improving the user satisfaction degree of the search engine. This is the relevance principle of the search engine and has been taken as one of the most basic principles of the search engine. Relevance ranking models of the search engine comprises a Boolean model, a vector space model, a probabilistic model, a hyperlink model and a self-learning ranking model. The Boolean model is established on the basis of classical set theory and Boolean algebra and judges whether the documents are relevant or not according to whether keywords appear in the documents or not, so that all of the relevant documents have the same degree of relevance to the inquiry and the relevance ranking is not supported. The vector space model respectively converts the documents and the user inquiry to a vector form, calculates included angle cosine of two vectors and ranks the documents according to a descending order. The probabilistic model ranks all of the documents according to relevance probability by estimating the relevance probability of each document with the inquiry. The hyperlink model calculates the rank of each web page according to hyperlinks between the web pages and judges the level of each web page according to the number of links and the quality of the linked pages. The self-learning ranking model applies a machine learning method to the search engine relevance ranking problem, thereby solving many shortcomings of the existing models. The self-learning ranking model learns the ranking model according to training samples and uses the ranking model to rank the documents which are predicted to be relevant to the inquiry.

At present, different search engines use different relevance ranking methods. There are two methods which are relatively popular: a hyperlink analysis method, namely the more times the web page is linked and the more authority a linked website has, the higher quality the webpage is; and a word frequency counting method, namely the higher frequency the inquiry words appear in the webpage document, the higher the rank is. In addition, there is a click ratio method, namely the more times the web page is clicked, the higher the relevance is. The purpose of any search engine is to respond to user search faster and feed the search results meeting the user needs back to the search user. Whether the high-quality documents which are most relevant to the user search needs can be ranked ahead in the results or not is one of key technologies for measuring the performances of the search engine.

### Summary of the Invention

The invention aims to provide a search engine ranking method based on user participation, which can enable a user to conveniently find corresponding results according to the results of evaluation in which the user participates and facilitate the use by people according to needs by enabling the user to participate in evaluation of a search list, score and evaluate evaluation results and use the evaluation results to participate in ranking.

In order to realize the above object, the technical solution of the invention is as follows:A search engine ranking method based on user participation is a method based on a search engine ranking system and a user can express approval, like, disapproval, opposition and other opinions on a display list of search results and perform scoring on all of information and search results; and according to score values of the search results, in next search of the results, the results will be automatically ranked according to the score values, the results with high scores will be ranked ahead and a program for preventing malicious scoring is set. A system established for implementing the method comprises users, the search engine ranking system, a model processing system and an output system, wherein
(1) The users are divided into registered users and non-registered users, personalized services are mainly targeted at the registered users and the non-registered users have a function of search engine ranking. The search engine ranking system itself is relatively complex and in order to ensure the quality and the real-time property of search engine ranking, a reasonable search engine ranking system is required to be constructed.
(2) The search engine ranking system adopts the method based on the user participation, belongs to completely personalized search engine ranking and provides the personalized services for the users, wherein the search engine ranking system needs to manage website information, user registration information, scores and other data, as well as the search engine ranking method, a search engine ranking model, the search engine ranking results and other contents. Taking into account of the operation efficiency of the search engine ranking method and the requirements on real-time property of search engine ranking, the system comprises two parts, namely an online real-time search engine ranking part and a model processing part. Online is for the access users. Model processing is performed in a non-real-time manner, thereby being conductive to improving the execution efficiency of the search engine ranking system. The search engine ranking system is applicable to general websites, user personal information is acquired according to user registration information and a list of contents of interest is predicted according to the evaluations of the user on the different display lists. The search engine ranking system aims to facilitate the selection of the evaluations by the user and promote the search selection. As the different search engine ranking technology can obtain better effects in the specific type of search engine ranking systems, it has a certain range of applications. Generally, the display list of the search results needs to be described according to the feeling of the user, instead of being completely described in a normal form. After the user selects a display list of the search results, the user can express approval, like, disapproval, opposition and other opinions according to a series of information of the user.
(3) The model processing system is mainly used for processing the data according to the search engine ranking method to obtain the model, and when a user browses a web page, the online search engine ranking can output a search engine ranking list in a real-time manner according to the results of the model and feed back the search engine ranking list to the user. The online search engine ranking part can execute different search engine ranking strategies according to different situations. Particularly, by adopting the different search engine ranking methods for new users, a cold start problem is solved to a certain extent and the quality of search engine ranking is improved.
(4) An input and output system: the personalized search engine ranking system has the main functions of collecting user information, the website information and website evaluation information and providing the search engine ranking list for the user by model processing.

The data which needs to be managed by the system is as follows: the system needs a lot of data existing in the display list of the search results for analysis and the data managed by the system mainly comprises input data, model data and output data.
(1) Input data: input of the system comprises the user information, display list information and user evaluation information, wherein the user information data is obtained by collecting the filled personal information after a user logs in the system. The user information comprises user mark, login password, age, gender, occupation, address and e-mail. The search engine ranking system needs to perform search engine ranking on the information of the display list of interest for the user and simultaneously predict user interest degree according to the information of interest and a corresponding search engine ranking algorithm. The system performs the search engine ranking on the display list, so that the information mainly comprises number of list, name of list, date and type. The search engine ranking system acquires evaluation data information of the user on the list information as an important input content of the search engine ranking algorithm. Evaluations of the user on the list information are various, such as description in a character form and a fuzzy evaluation (approval, like, disapproval and opposition) or direct scoring form. A scoring method is performed on the list information by the user. The evaluation information comprises user mark, number of list, score and time mark.
(2) The model data comprises the following two types:
   (i) Model input data: the core of the search engine ranking system is the model of the search engine ranking algorithm; and however, because different algorithms require different input data, when calculation is performed, pre-processing needs to be performed on the input data of the system to arrange the input data into the model input data. The model input data mainly comprises user, list information and score data. The user data is that the user information is converted to a form which is required by the algorithm model, and specifically comprises user mark, age group, gender mark and occupation mark, wherein age, gender and occupation are respectively data forms of the corresponding user information after pre-processing of the model data. The list data is that the list information is converted to the form which is required by the model, and comprises number of list, type 1, type 2, ... , and type M, wherein the types are obtained by conversion according to the list information, the different types are represented as different fields and each list type is represented in the form of a row of 0-1 vectors. The score data is that the user evaluation data needs to be processed to become a score matrix form, and comprises number of user, score of list 1, score of list 2, ..., and score of list K, wherein the score data of each user is represented in the form of rowed vectors.
   (ii) Model output data: the model structure data is that the search engine ranking system utilizes the search engine ranking algorithm to calculate the input data so as to obtain structural composition data of the algorithm model as the basis of prediction and the model output data comprises model mark, algorithm-based weight and model parameters; and user classification data is classification results obtained after processing of the model input data by using the algorithm. The user classification data comprises two parts of contents, wherein one part is the classification results of the original users and comprises number of user, model mark and classification number; and the other part is evaluation results of classification and comprises number of model, classification number, score of list 1, score of list 2, ..., and score of list K.
(3) Output data:
   different models are adopted according to different applications of the search engine ranking system and three output results are mainly produced:
      (i) User prediction score data: the output of the search engine ranking system is that search engine ranking results are output after the model is applied for performing user prediction. According to the input data and the model data of the search engine ranking system, the predicted search engine ranking results of the user are obtained by calculation and the user prediction score data comprises number of user, model mark, classification number, number of list and score. Predicted user data of a new list: the possible user class of interest is predicted according to the characteristics of the new list and the user score information.
      (ii) New user score data: user score results are predicted according to the data of the new user and the original users and the new user score data comprises number of new user, number of model, number of list and score. If the user is not satisfied with all the search results or does not get the information he wants, the user can consciously provide and add the search information which should appear according to his thought. The added information will appear in the position of a certain page. The added information will be listed on the right side of the search results or listed after the search results with high scores and the added results also participate in scoring of other users. The score value decides its ranking order.

The working process of the model processing part is as follows:
The model processing part of the search engine ranking system is invisible for access users. As the data amount of the list websites is huge and increased rapidly, the processing of the algorithm model will consume longer time. The resource consumption of the system is great and the real-time property of search engine ranking is seriously affected. Thus, the search engine ranking system adopts an offline calculation model to produce model output results. When online search engine ranking is performed, the model results and the system input data are utilized and the search engine ranking results are returned to the user. The calculation of the model is updated according to increments of the input data, and when the newly increased user score data achieves a certain limit value, the model needs to be re-processed and the specific steps are as follows:
   (1) Pre-processing of the data: the data is processed according to the requirements of different algorithms and the system input data is processed into the model input data.
   (2) The model calculates the variations of the search engine ranking system according to the amount of data, the model is periodically operated, the updated data is calculated and the model output results are modified, thereby ensuring the quality search engine ranking.

The online search engine ranking process is as follows:
The main task of the personalized list search engine ranking system is to search the engine ranking list according to personal preferences of the user. The main function of online recommendation is analyzing the type of search engine ranking, the output results and the input data of the corresponding algorithm model are selected to combine with the input data to predict the search engine ranking results, the search engine ranking results are fed back to the user.
   (1) Selecting the model: the search engine ranking system selects different models according to the type of search engine ranking, and the search engine ranking system mainly comprises three types of search engine ranking:
      (i) Search engine ranking of the scoring user: if the user is the scoring user which has existed in the system, the model for classification is selected according to the score data, the list data and the user data.
      (ii) Search engine ranking of the new list: the new list means that any user score data and list characteristic data about the list do not exist in the original search engine ranking system. The search engine ranking for the new list applies the content-based classification model for analysis according to input list characteristics. If the user is not satisfied with all the search results or does not get the wanted information, the user can consciously provide and add the search information which should appear according to his thought. The added information will appear in the position of a certain page. The added information will be listed on the right side of the search results or listed after the search results with high scores and the added results also participate in scoring of other users. The score value decides its ranking order.
      (iii) Search engine ranking of the new user: the new user means that no any score data exists in the search engine ranking system, and there are two types of users, one type is newly registered users and the other type is the users who are registered but have not performed scoring. The search engine ranking of the new users adopts the model according to the user information.
   (2) Prediction search engine ranking:
      calculation is performed according to the output results and the input data of the model and the search engine ranking results are predicted. The online search engine ranking adopts the real-time search engine ranking mode to perform search engine ranking. When the user logs in the website of the search engine ranking system and browses the page, the score data of the user is directly read, the list of interest of the user is predicted and the possible list of interest is directly fed back to the user.

Two types of search engine ranking can be realized by combining with a hybrid search engine ranking algorithm based on the user information, wherein neighbor clustering combined with the hybrid search engine ranking based on the contents and the user information forms user preferences according to the list information and the user score data and then performs neighbor clustering to cluster the similar users. After that, the neighbor clustering combines with the test user information for prediction to produce the user search engine ranking list. The other type adopts the search engine ranking algorithm based on the user information to realize the search engine ranking of the new user, a support vector machine is used for predicting the score of the new user by weighing according to the new user information and the original user information and the search engine ranking list of the new user list is produced for use of the user.

The invention has the beneficial effects that, by adopting the method of the invention, the user participation can be strengthened, expressions of the opinions can be performed on the search information and other users can take the opinions as references, thereby effectively improving search quality, facilitating the selection of the users by referring to the opinions, further effectively reducing search time of the users and improving handling efficiency and capability of learning information.

### Brief Description of the Drawings

Fig. 1 is a basic framework diagram of a search engine used in an embodiment of the invention.
Fig. 2 is an online scoring flow diagram in the search engine in the embodiment of the invention.
Fig. 3 is a flow diagram of combining a list and user scores in the embodiment of the invention.
Fig. 4 is a flow diagram of combining the list and new user scores in the embodiment.

### Detailed Description of the Embodiment

The invention will be better understood by describing specific implementation way of the invention described below in conjunction with the accompanying drawings and an embodiment.

### Embodiment

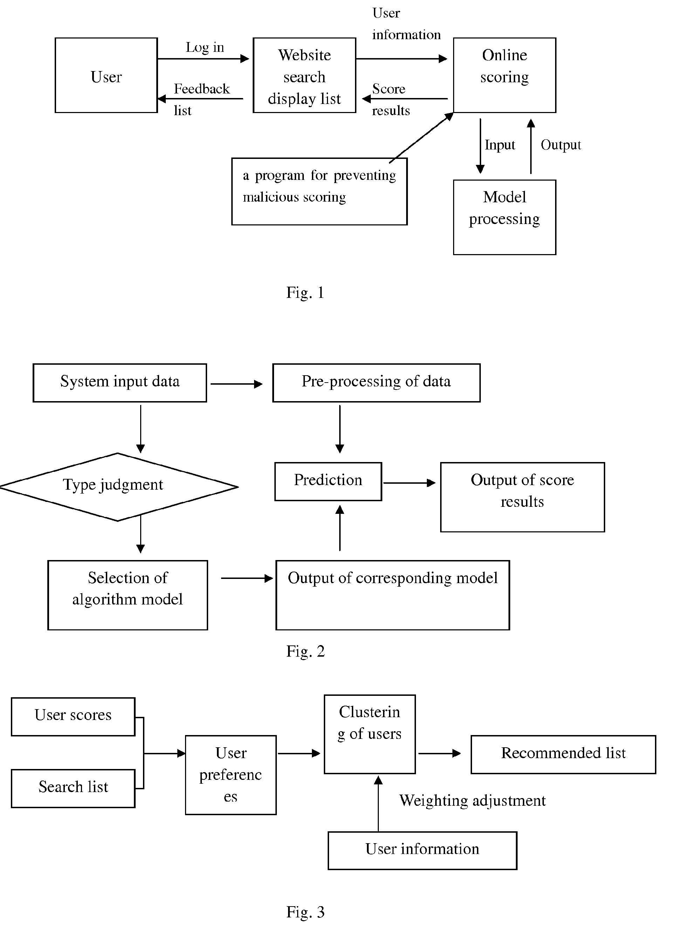

A search engine ranking method based on user participation is a method based on a search engine ranking system and the basic framework of the system is as shown in Fig. 1. Taking a certain search engine website as an example, a user can express approval, like, disapproval, opposition and other opinions on a display list of search results and perform scoring on all of information and search results; and according to score values of the search results, in next search of the results, the results will be automatically ranked according to the score values and the results with high scores will be ranked ahead. Simultaneously, a specific program for preventing malicious scoring is set. As shown in Fig. 1, the system comprises users, the search engine ranking system, a model processing system and an output system, wherein the users are divided into registered users and non-registered users, personalized services are mainly targeted at the registered users and the non-registered users have a function of search engine ranking. The search engine ranking system itself is relatively complex and in order to ensure the quality and the real-time property of search engine ranking, a reasonable search engine ranking system is required to be constructed. The search engine ranking system based on the user participation belongs to completely personalized search engine ranking, adopts a reasonable algorithm and provides personalized services for the registered users, wherein the search engine ranking system needs to manage website information, user registration information, scores and other data, as well as the search engine ranking method, a search engine ranking model, the search engine ranking results and other contents. Taking into account of the operation efficiency of the search engine ranking method and the requirements on real-time property of search engine ranking, the system comprises two parts, namely an online real-time search engine ranking part and a model processing part. Online is for the access users. Model processing can be performed in a non-real-time manner, thereby being conductive to improving the execution efficiency of the search engine ranking system. The model processing part is mainly used for processing the data according to the search engine ranking method to obtain the model, and when a user browses a web page, the online search engine ranking can output a search engine ranking list in the real-time manner according to the results of the model and feed back the search engine ranking list to the user. The online search engine ranking part can execute different search engine ranking strategies according to different situations. Particularly, by adopting different search engine ranking methods for new users, a cold start problem is solved to a certain extent and the quality of search engine ranking is improved. Fig. 2 is an online scoring flow diagram in the search engine in the embodiment of the invention.

The applicability of the search engine ranking system is as follows:
An input and output system: the personalized search engine ranking system has the main functions of collecting user information, the website information and website evaluation information and providing the search engine ranking list for the user by model processing. The search engine ranking system is applicable to general websites, user personal information is acquired according to user registration information and a list of contents of interest is predicted according to the evaluations of the user on the different display lists. The search engine ranking system aims to facilitate the selection of the evaluations by the user and promote the search selection. As the different search engine ranking technology can obtain better effects in the specific type of search engine ranking systems, it has a certain range of applications. Generally, the display list of the search results needs to be described according to the feeling of the user, instead of being completely described in a normal form. After the user selects a display list of the search results, the user can express approval, like, disapproval, opposition and other opinions according to a series of information of the user. Fig. 3 is a flow diagram of combining a list and user scores in the embodiment of the invention.

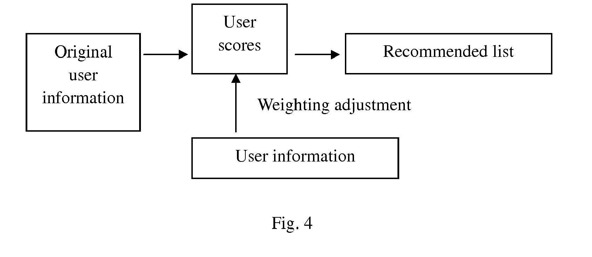

The data which needs to be managed by the system and the operation process of the system are as follows: the system needs a lot of data existing in the display list of the search results for analysis and the data managed by the system mainly comprises input data, model data and output data.
(1) Input data: input of the system comprises the user information, display list information and user evaluation information, wherein the user information data is obtained by collecting the filled personal information after a user logs in the system. The user information comprises user mark, login password, age, gender, occupation, address and e-mail. The display list information: the search engine ranking system needs to performs search engine ranking on the possible information of the display list of interest for the user and simultaneously predict user interest degree according to the information of interest and a corresponding search engine ranking algorithm. The system performs the search engine ranking on the display list, so that the information mainly comprises number of list, name of list, date and type. The user evaluation information: the search engine ranking system acquires evaluation data information of the user on the list information as an important input content of the search engine ranking algorithm. Evaluations of the user on the list information are various, such as description in a character form and a fuzzy evaluation (approval, like, disapproval and opposition) or direct scoring form. A scoring method is performed on the list information by the user. The evaluation information comprises user mark, number of list, score and time mark.
(2) The model data comprises the following two types:
   (i) Model input data: the core of the search engine ranking system is the model of the search engine ranking algorithm; and however, because different algorithms require different input data, when calculation is performed, pre-processing needs to be performed on the input data of the system to arrange the input data into the model input data. The model input data mainly comprises user, list information and score data. The user data is that the user information is converted to a form which is required by the algorithm model, and specifically comprises user mark, age group, gender mark and occupation mark, wherein age, gender and occupation are respectively data forms of the corresponding user information after pre-processing of the model data. The list data is that the list information is converted to the form which is required by the model, and comprises number of list, type 1, type 2, ... , and type M, wherein the types are obtained by conversion according to the list information, the different types are represented as different fields and each list type is represented in the form of a row of 0-1 vectors. The score data is that the user evaluation data needs to be processed to become a score matrix form, and comprises number of user, score of list 1, score of list 2, ..., and score of list K, wherein the score data of each user is represented in the form of rowed vectors.
   (ii) Model output data: the model structure data is that the search engine ranking system utilizes the search engine ranking algorithm to calculate the input data so as to obtain structural composition data of the algorithm model as the basis of prediction. The model output data comprises model mark, algorithm-based weight and model parameters; and user classification data is classification results obtained after processing of the model input data by using the algorithm. The user classification data comprises two parts of contents, wherein one part is the classification results of the original users and comprises number of user, model mark and classification number; and the other part is evaluation results of classification and comprises number of model, classification number, score of list 1, score of list 2, ..., and score of list K.
(3) Output data:
   Different models are adopted according to different applications of the search engine ranking system and three output results are mainly produced:
      (i) User prediction score data: the output of the search engine ranking system is that search engine ranking results are output after the model is applied for performing user prediction. According to the input data and the model data of the search engine ranking system, the predicted search engine ranking results of the user are obtained by calculation. The user prediction score data comprises number of user, model mark, classification number, number of list and score. Predicted user data of a new list: the possible user class of interest is predicted according to the characteristics of the new list and the user score information.
      (ii) New user score data: user score results are predicted according to the data of the new user and the original users. The new user score data comprises number of new user, number of model, number of list and score. If the user is not satisfied with all the search results or does not get the information he wants, the user can consciously provide and add the search information which should appear according to his thought. The added information will appear in the position of a certain page. The added information will be listed on the right side of the search results or listed after the search results with high scores and the added results also participate in scoring of other users. The score value decides its ranking order. Fig. 4 is a flow diagram of combining the list and a new user score in the embodiment of the invention.

### Model processing part:

The model processing part of the search engine ranking system is invisible for access users. As the data amount of the list websites is huge and increased rapidly, the processing of the algorithm model will consume longer time. The resource consumption of the system is great and the real-time property of search engine ranking is seriously affected. Thus, the search engine ranking system adopts an offline calculation model to produce model output results.

When online search engine ranking is performed, the model results and the system input data are utilized and the search engine ranking results are returned to the user. The calculation of the model is updated according to increments of the input data, and when the newly increased user score data achieves a certain limit value, the model needs to be re-processed and the specific steps are as follows:
(1) Pre-processing of the data: the data is processed according to the requirements of different algorithms and the system input data is processed into the model input data.
(2) The model calculates the variations of the search engine ranking system according to the amount of data, the model is periodically operated, the updated data is calculated and the model output results are modified, thereby ensuring the quality of search engine ranking. Online search engine ranking part:
   The main task of the personalized list search engine ranking system is to search the engine ranking list according to personal preferences of the user. The main function of online recommendation is analyzing the type of search engine ranking, the output results and the input data of the corresponding algorithm model are selected to combine with the input data to predict the search engine ranking results, the search engine ranking results are fed back to the user. The main process is as shown in Fig. 3 and Fig. 4.
      (1) Selecting the model: the search engine ranking system selects different models according to the type of search engine ranking, and the search engine ranking system mainly comprises three types of search engine ranking:
         (i) Search engine ranking of the scoring user: if the user is the scoring user which has existed in the system, the model for classification is selected according to the score data, the list data and the user data.
         (ii) Search engine ranking of the new list: the new list means that any user score data and list characteristic data about the list do not exist in the original search engine ranking system. The search engine ranking for the new list applies the content-based classification model for analysis according to input list characteristics. If the user is not satisfied with all the search results or does not get the wanted information, the user can consciously provide and add the search information which should appear according to his thought. The added information will appear in the position of a certain page. The added information will be listed on the right side of the search results or listed after the search results with high scores and the added results also participate in scoring of other users. The score value decides its ranking order.
         (iii) Search engine ranking of the new user: the new user means that no any score data exists in the search engine ranking system, and there are two types of users, one type is newly registered users and the other type is the users who are registered but have not performed scoring. The search engine ranking of the new users adopts the model according to the user information.
      (2) Prediction search engine ranking
         Calculation is performed according to the output results and the input data of the model and the search engine ranking results are predicted. The online search engine ranking adopts the real-time search engine ranking mode to perform search engine ranking. When the user logs in the website of the search engine ranking system and browses the page, the score data of the user is directly read, the list of interest of the user is predicted and the possible list of interest is directly fed back to the user.

Two types of search engine ranking can be realized by combining with a hybrid search engine ranking algorithm based on the user information, wherein neighbor clustering combined with the hybrid search engine ranking based on the contents and the user information forms user preferences according to the list information and the user score data and then performs neighbor clustering to cluster the similar users. After that, the neighbor clustering combines with the test user information for prediction to produce the user search engine ranking list. The other type adopts the search engine ranking algorithm based on the user information to realize the search engine ranking of the new user, a support vector machine is used for predicting the score of the new user by weighing according to the new user information and the original user information and the search engine ranking list of the new user list is produced for use of the user.

The above description is only the preferred implementation way of the invention. It should be noted that those of ordinary skill in the art can make various improvements and modifications without departing from the principle of the invention, and the improvements and modifications should also be interpreted as falling within the protection scope of the invention.

## Claims

1. A search engine ranking method based on user participation, **characterized in that** the method is based on a search engine ranking system and a user can express approval, like, disapproval, opposition and other opinions on a display list of search results and perform scoring on all of information and search results; and according to score values of the search results, in next search of the results, the results will be automatically ranked according to the score values, the results with high scores will be ranked ahead and a program for preventing malicious scoring is set; and a system for implementing the method comprises users, the search engine ranking system, a model processing system and an output system, wherein
(1) the users are divided into registered users and non-registered users, personalized services are mainly targeted at the registered users and the non-registered users have a function of search engine ranking;
(2) the search engine ranking system adopts the method based on the user participation, belongs to completely personalized search engine ranking and provides the personalized services for the users; the search engine ranking system is used for managing website information, user registration information, scores and other data, as well as the search engine ranking method, a search engine ranking model, the search engine ranking results and other contents; the system comprises two parts, namely an online real-time search engine ranking part and a model processing part; online is for the access users and the model processing is performed in a non-real-time manner; the search engine ranking system is applicable to general websites, user personal information is acquired according to the user registration information and a list of contents of interest is predicted according to the evaluations of the user on the different display lists; and after the user selects a display list of the search results, the user can express approval, like, disapproval, opposition and other opinions according to a series of information of the user;
(3) the model processing system is mainly used for processing the data according to the search engine ranking method to obtain the model, and when a user browses a web page, the online search engine ranking can output a search engine ranking list in the real-time manner according to the results of the model and feed back the search engine ranking list to the user; the online search engine ranking part can execute different search engine ranking strategies according to different situations; and particularly, by adopting different search engine ranking methods for new users, a cold start problem is solved to a certain extent and the quality of search engine ranking is improved; and
(4) an input and output system: the personalized search engine ranking system has the main functions of collecting user information, the website information and website evaluation information and providing the search engine ranking list for the user by model processing.

2. The search engine ranking method based on the user participation according to claim 1, **characterized in that** the data which needs to be managed by the system mainly comprises input data, data model and output data, wherein
(1) the input data: input of the system comprises the user information, display list information and user evaluation information; the user information data is obtained by collecting the filled personal information after the user logs in the system; the user information comprises user mark, login password, age, gender, occupation, address and e-mail; the search engine ranking system performs search engine ranking on the information of the display list of interest for the user and simultaneously predicts user interest degree according to the information of interest and a corresponding search engine ranking algorithm; the information mainly comprises number of list, name of list, date and type; the search engine ranking system acquires evaluation data information of the user on the list information as an important input content of the search engine ranking algorithm; evaluations of the user on the list information are various, such as description in a character form and a fuzzy evaluation (approval, like, disapproval and opposition) or direct scoring form; and the evaluation information comprises user mark, number of list, score and time mark;
(2) the model data comprises the following two types:
(i) model input data: the core of the search engine ranking system is the model of the search engine ranking algorithm; however, because different algorithms require the different input data, when calculation is performed, pre-processing needs to be performed on the input data of the system to arrange the input data into the model input data; and the model input data mainly comprises user, list information and score data; the user data is that the user information is converted to a form which is required by the algorithm model, and specifically comprises user mark, age group, gender mark and occupation mark, wherein age, gender and occupation are respectively data forms of the corresponding user information after pre-processing of the model data; the list data is that the list information is converted to the form which is required by the model, and comprises number of list, type 1, type 2, ..., and type M; the types are obtained by conversion according to the list information, the different types are represented as different fields and each list type is represented in the form of a row of 0-1 vectors; the user evaluation data needs to be processed to become a score matrix form and comprises number of user, score of list 1, score of list 2, ..., and score of list K, wherein the score data of each user is represented in the form of rowed vectors; and
(ii) model output data: the search engine ranking system utilizes the search engine ranking algorithm to calculate the input data so as to obtain structural composition data of the algorithm model as the basis of prediction and the model output data comprises model mark, algorithm-based weight and model parameters; user classification data is classification results obtained after processing of the model input data by using the algorithm and comprises two parts of contents, one part is the classification results of the original users and comprises number of user, model mark and classification number; and the other part is evaluation results of classification and comprises number of model, classification number, score of list 1, score of list 2, ..., and score of list K; and
(3) output data:
different models are adopted according to different applications of the search engine ranking system and three output results are mainly produced:
(i) user prediction score data: the output of the search engine ranking system is that search engine ranking results are output after the model is applied for performing user prediction; according to the input data and the model data of the search engine ranking system, the predicted search engine ranking results of the user are obtained by calculation and the user prediction score data comprises number of user, model mark, classification number, number of list and score; and the possible user class of interest is predicted according to the characteristics of a new list and the user score information; and
(ii) new user score data: user score results are predicted according to the data of the new user and the original users and the new user score data comprises number of new user, number of model, number of list and score; if the user is not satisfied with all of the search results or does not get the information he wants, the user can consciously provide and add the search information which should appear according to his thought and the added information will appear in the position of a certain page; and the added information will be listed on the right side of the search results or listed after the search results with high scores, the added results also participate in scoring of other users and the score value decides its ranking order.

3. The search engine ranking method based on the user participation according to claim 1, **characterized in that** the working process of the model processing part is as follows: the model processing part of the search engine ranking system is invisible for the access users and adopts an offline calculation model to produce model output results; when online search engine ranking is performed, the model results and the system input data are utilized and the search engine ranking results are returned to the user; and the calculation of the model is updated according to increments of the input data, and when the newly increased user score data achieves a certain limit value, the model needs to be re-processed and the specific steps are as follows:
(1) pre-processing of the data: the data is processed according to the requirements of different algorithms and the system input data is processed into the model input data; and
(2) the model calculates the variations of the search engine ranking system according to the amount of data, the model is periodically operated, the updated data is calculated and the model output results are modified, thereby ensuring the quality of search engine ranking.

4. The search engine ranking method based on the user participation according to claim 1, **characterized in that** the online search engine ranking process is as follows: the main function of online recommendation is analyzing the type of search engine ranking, the output results and the input data of the corresponding algorithm model are selected to combine with the input data to predict the search engine ranking results, the search engine ranking results are fed back to the user, and the specific process is as follows:
(1) selecting the model: the search engine ranking system selects different models according to the type of search engine ranking, and the search engine ranking system mainly comprises three types of search engine ranking:
(i) search engine ranking of the scoring user: if the user is the scoring user which has existed in the system, the model for classification is selected according to the score data, the list data and the user data;
(ii) search engine ranking of the new list: the new list means that any user score data and list characteristic data about the list do not exist in the original search engine ranking system; the search engine ranking for the new list applies the content-based classification model for analysis according to input list characteristics; if the user is not satisfied with all of the search results or does not get the wanted information, the user can consciously provide and add the search information which should appear according to his thought; the added information will appear in the position of the certain page; and the added information will be listed on the right side of the search results or listed after the search results with high scores and the added results also participate in scoring of other users and the score value decides its ranking order; and
(iii) search engine ranking of the new user: the new user means that no any score data exists in the search engine ranking system, and there are two types of users, one type is newly registered users and the other type is the users who are registered but have not performed scoring; and the search engine ranking of the new user adopts the model according to the user information; and
(2) prediction search engine ranking:
calculation is performed according to the output results and the input data of the model and the search engine ranking results are predicted; the online search engine ranking adopts the real-time search engine ranking mode to perform search engine ranking; when the user logs in the website of the search engine ranking system and browses the page, the score data of the user is directly read, the list of interest of the user is predicted and the possible list of interest is directly fed back to the user; two types of search engine ranking are realized by combining with a hybrid search engine ranking algorithm based on the user information; wherein, neighbor clustering combined with the hybrid search engine ranking based on the contents and the user information forms user preferences according to the list information and the user score data, then performs neighbor clustering to cluster the similar users and then combines with the test user information for prediction so as to produce the user search engine ranking list; and the other type adopts the search engine ranking algorithm based on the user information to realize the search engine ranking of the new user, a support vector machine is used for predicting the score of the new user by weighing according to the new user information and the original user information and the search engine ranking list of the new user list is produced for used of the user.
